# EUROPEAN PATENT APPLICATION

(11) **EP 1 947 136 A1**
(43) Date of publication of application: **23.07.2008**
(21) Application number: 06796977.4
(22) Date of filing: 29.08.2006
(51) Int. Cl.: C08J 3/12, C08L 53/00

(54) **PROCESS FOR PRODUCING PARTICULATE RESIN**

(30) Priority: 20.09.2005 JP 2005271373
(71) Applicant: Kaneka Corporation, Kita-ku Osaka-shi, Osaka 530-8288 (JP)
(72) Inventor: HAYASHI, Keizo, Takasago-shi Hyogo 676-8688 (JP); YOSHIMI, Tomoyuki, Takasago-shi Hyogo 676-8688 (JP)
(74) Representative: TBK-Patent
(86) International application number: PCT/JP2006/317000
(87) International publication number: WO 2007/034660

(57) **Abstract**

A process for particulate-resin production from an aqueous solution containing resin particles by recovering the particulate resin from the solution. In recovering the particulate resin from the aqueous solution, a lubricant is added in an amount of 0.05-5 parts by weight per 100 parts by weight of the resin ingredient contained in the particulate resin and a dispersant is added in an amount 0.1 to 1 time by weight the amount of the lubricant. Thus, a particulate resin excellent in transparency and blocking resistance can be obtained. In particular, a particulate isobutyrene block copolymer resin can be stably produced.

## Description

### TECHNICAL FIELD

The present invention relates to a process for producing a particulate resin, and particularly relates to a method suitable for producing a particulate resin containing an isobutylene block copolymer.

### BACKGROUND ART

In view of ease of handling, etc., a polymer which is obtained by polymerizing a monomer component and a resin composition containing such a polymer are frequently pulverized for use. The pulverization of resin can be effected by, for example, forming an aqueous solution containing a particulate resin through the addition of water to a polymer solution obtained by polymerizing a monomer component according to a predetermined procedure.

As a method of separating/recovering the resin as a particulate substance from the aqueous solution containing the particulate resin, various methods involving removing moisture using various filters and centrifugal dehydrators are generally frequently used. However, when the resin is a rubber-like polymer, the particulate substance to be obtained is elastic and has an infinite form, which frequently causes a blocking problem in recovering.

In order to improve blocking resistance (properties with which blocking is hard to occur) of the particulate resin, the addition of lubricant is the most common measure. For example, there is a method of adding a lubricant, such as ethylenebisamide, sorbitan monostearate, to a thermoplastic resin (e.g., Patent Document 1). Moreover, there is also a method of adding a hard emulsion polymerization polymer to a thermoplastic resin (e.g., Patent Documents 2 and 3). Furthermore, there are a method of coating a hydrogenated styrene elastomer with a powdered mineral or a powdered organic substance after drying the elastomer (e.g., Patent Document 4) and a method of coating a hydrogenated styrene elastomer with polypropylene fine particles (e.g., Patent Document 5).

With regard to the blocking resistance of the particulate resin product, the same applies to a block copolymer. More specifically, when a resin which has been pulverized without using any surface modifier is recovered, blockage at a recovery hopper or blocking inside a flexible container occur; troubles that conveying cannot be performed; and blockage troubles occur before dehydrating and drying an aqueous solution containing a particulate resin (slurry).

However, a method of adding a lubricant requires a large amount of lubricant for maintaining sufficient blocking resistance. In such a case, there is a problem that filtration wastewater becomes muddy due to excessive lubricant. In order to maintain the transparency of resin, when ultrafine particles, such as silica, are added, there arises a problem that silica does not efficiently adhere to the surface of resin. As is clear from the above, a method of effectively adding a lubricant for improving blocking resistance was not established until now.

Therefore, in producing a particulate resin, the development of a method has been demanded which can stably produce a product which is free from deterioration in the quality and which is excellent in transparency and blocking resistance.

Patent Document 1: Japanese Unexamined Patent Publication No. Sho64-26644
Patent Document 2: Japanese Unexamined Patent Publication No. Hei4-300947
Patent Document 3: Japanese Unexamined Patent Publication No. Hei7-3106
Patent Document 4: Japanese Unexamined Patent Publication No. Hei10-330404
Patent Document 5: Japanese Unexamined Patent Publication No. 2002-371136

### Disclosure of the Invention

### Problems to be Solved by the Invention

In view of the above-described present circumstances, the present invention aims to provide a method of stably producing a particulate resin excellent in blocking resistance, especially a particulate resin of an isobutylene block copolymer, without deteriorating the resin quality, especially transparency.

### Means for solving the Problems

The present invention provides a method of producing a particulate resin, comprising, in recovering a particulate resin from an aqueous solution containing the particulate resin, adding a lubricant in an amount of 0.05 to 5 parts by weight per 100 parts by weight of a resin component contained in the resin particulate and a dispersant in an amount 0.1 to 1 time by weight the amount of the lubricant to the aqueous solution.

The present invention also provides a method of producing a particulate resin, comprising:
a step of polymerizing a monomer component to prepare a polymer solution;
a pulverization step of adding a surfactant and water to the polymer solution, and performing liquid-liquid dispersion by stirring for removing a solvent, thereby preparing an aqueous solution containing a particulate resin;
a steam stripping step of removing a remaining polymerization solvent from the aqueous solution containing the resin particulate; and
a recovery step of dehydrating and drying the aqueous solution containing the particulate resin from which the polymerization solvent has been removed, and recovering the particulate resin, wherein
the lubricant and the dispersant are added to the aqueous solution containing the particulate resin obtained in the pulverization step and the lubricant and the dispersant are adhered to the surface of the particulate resin in the steam stripping step.

In the method of the present invention, it is preferable to use fatty acid amide as the lubricant. It is preferable to use methylcellulose as the dispersant.

The method of the present invention is suitably applied to the production of a particulate substance of an isobutylene polymer. More specifically, as the resin component, an isobutylene polymer is suitably used. Preferable as the isobutylene polymer is a block copolymer comprising a block polymer containing isobutylene as a main body and a block polymer containing an aromatic vinyl monomer as a main body.

### Effect of the Invention

According to the production method of the present invention, the blocking resistance of the particulate resin can be improved without deteriorating the quality of the particulate resin, especially transparency. Moreover, muddiness of the filtration wastewater occurring when recovering the particulate resin from an aqueous solution containing the particulate resin can be removed, and, as a result, waste water treatment is facilitated.

### BEST MODE FOR CARRYING OUT THE INVENTION

The method of the present invention can be widely applied to the production of a particulate resin, which is effected by adding water to a polymer obtained by polymerizing one or two or more monomer components, and then pulverizing the solution by heating and stirring. There is no limitation on a polymer to which the method of the present invention can be applied, and the method of the present invention can be applied to polymers obtained by various polymerization methods, such as cationic polymerization, anionic polymerization, and radical polymerization. In particular, the method of the present invention is suitable for an isobutylene polymer which is difficult to provide a particulate substance having a favorable balance between the blocking resistance and the transparency according to a conventional method because the isobutylene polymer has high viscoelasticity.

Hereinafter, the present invention will be described more specifically referring to an example of a method of producing a particulate substance containing the isobutylene polymer.

The first step in the method of producing the particulate substance containing the isobutylene polymer is a step of polymerizing a monomer component and preparing an isobutylene polymer solution.

As the isobutylene polymer, an isobutylene copolymer comprising (A) a block polymer containing isobutylene as a main body and (B) a block polymer containing an aromatic vinyl monomer as a main body is preferable. To be specific, preferable is a substance obtained by subjecting isobutylene and a monomer, such as an aromatic vinyl monomer, to cationic polymerization with an initiator in the presence of a Lewis acid catalyst.

The block polymer (A) containing isobutylene as a main body usually refers to a block polymer containing an isobutylene unit in an amount of 60% by weight or more, and preferably 80% by weight or more.
There is no limitation on a monomer component other than an isobutylene unit in the block polymer (A) insofar as the monomer can be subjected to cationic polymerization. Mentioned as such a monomer component are monomers, such as aliphatic olefins, dienes, vinyl ethers, silanes, vinylcarbazole, β-pinene, acenaphthylene.
As the aliphatic olefin monomer, ethylene, propylene, 1-butene, 2-methyl-1-butene, 3-methyl-1-butene, pentene, hexene, cyclohexene, 4-methyl-1-pentene, vinylcyclohexane, octene, norbornene, etc., are mentioned.
As the diene monomer, butadiene, isoprene, hexadiene, cyclopentadiene, cyclohexadiene, dicyclopentadiene, divinylbenzene, ethylidene norbornene, etc., are mentioned.
As the vinyl ether monomer, methyl vinyl ether, ethyl vinyl ether, (n-iso)propyl vinyl ether, (n-, see-, tert-, iso)butyl vinyl ether, methyl propenyl ether, ethyl propenyl ether, etc., are mentioned.
As the silane compound, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, γ-methacryloyloxypropylmethyldimethoxysilane, etc., are mentioned.
The above-mentioned substances may be used alone or as a combination of two or more thereof.

The block polymer (B) containing the aromatic vinyl monomer as a main body usually refers to a block polymer containing an aromatic vinyl monomer unit in an amount of 60% by weight or more, and preferably 80% by weight or more. There is no limitation on the aromatic vinyl monomer, and, for example, styrene, o-, m- or p-methyl styrene, α-methyl styrene, indene, etc., are mentioned. The above-mentioned substances may be used alone or as a mixture of two or more thereof. Among the above, styrene, p-methyl styrene, α-methyl styrene, or mixtures thereof are preferable in view of cost.
There is no limitation on a monomer component other than the aromatic vinyl monomer unit in the block polymer (B) insofar as it is a monomer component which can be subjected to cationic polymerization. For example, isobutylene; monomers, which are the same as the monomers mentioned as monomer components other than isobutylene in the block polymer (A), such as aliphatic olefins, dienes, vinyl ethers, silanes, vinylcarbazole, β-pinene, acenaphthylene; etc., can be mentioned.

There is no limitation on the Lewis acid catalyst insofar as it can be subjected to cationic polymerization, and metal halides, such as TiCl₄, BCl₃, BF₃, AlCl₃, SnCl₄, can be mentioned. Among the above, titanium tetrachloride (TiCl₄) is preferable.

There is no limitation on the polymerization solvent for use in cationic polymerization, and solvents containing halogenated hydrocarbons, non-halogen solvents, mixtures thereof can be used. Preferable are mixed solvents of at least one member of carbon atoms 3 to 8 primary or secondary mono-halogenated hydrocarbons and at least one member of aliphatic or aromatic hydrocarbons. There is no limitation on the above-mentioned carbon atoms 3 to 8 primary and secondary mono-halogenated hydrocarbons, and methyl chloride, methylene chloride, 1-chlorobutane, chlorobenzene, etc., are mentioned. Among the above, 1-chlorobutane is preferable in view of the balance between the solubility of an isobutylene block copolymer, the ease of detoxication by decomposition, cost, etc. Moreover, there is no limitation on the above-mentioned aliphatic hydrocarbons and aromatic hydrocarbons, and for example, pentane, hexane, heptane, octane, cyclohexane, methylcyclohexane, ethylcyclohexane, toluene, etc., are preferable. Among the above, at least one member selected from the group consisting of methylcyclohexane, ethylcyclohexane, and toluene is preferable.

As an initiator for use in the cationic polymerization, a compound represented by the following General Formula (I) is preferable.

(CR¹R²X)ₙR³ (I)

Wherein X represents a halogen atom, carbon atoms 1 to 6 alkoxy group, or acyloxy group; R¹ and R² are the same or different and represent a hydrogen atom or carbon atoms 1 to 6 monovalent hydrocarbon group, and R¹ and R² may be the same or different; R³ represents a monovalent or multivalent aromatic hydrocarbon group or a monovalent or multivalent aliphatic hydrocarbon group; and n represents a natural number of 1 to 6.

As a specific example of the compound represented by General Formula (I), 1,4-bis(α-Krol-isopropyl)benzene[C₆H₄(C(CH₃)₂Cl)₂] is mentioned. The 1,4-bis(α-Krol-isopropyl)benzene is referred to as dicumyl chloride.

In polymerizing an isobutylene block copolymer, an electron-donor component can be made to co-exist, if needed. As such compounds, metallic compounds having an oxygen atom bonded to pyridines, amines, amides, sulfoxides, esters, or metal atoms can be mentioned, for example.

In actually performing polymerization, each component is mixed under cooling at, for example, -100°C or higher and lower than 0°C. In order to have a balance between the energy cost and the stability of polymerization, a particularly preferable temperature range is -80°C to 30°C.

There is no limitation on the number average molecular weight of the isobutylene block copolymer, and the number average molecular weight of the isobutylene block copolymer is preferably 30000 to 500000, and particularly preferably 50000 to 400000 in view of flowability, workability, and physical properties.

By bringing a polymer solution, which is obtained by polymerizing a monomer component according to the above-described method, into contact with water or alkaline water, a catalyst can be deactivated, thereby stopping the reaction. Thereafter, the resultant is washed with water, and then a residual catalyst and metal ions are extracted and removed. Thus, a purified polymer solution can be obtained. The temperatures for deactivating the catalyst and washing the resultant with water are not limited, and the temperatures are preferably in the range of room temperature to 100°C. Moreover, there is no limitation on the amount of water used for deactivation and washing, a volume ratio of water to a polymer solution is preferably in the range of 1/10 to 10.

The purified polymer solution thus obtained is successively supplied to the pulverization step (I). This step is also referred to as a crumbing step. In pulverizing, the resin concentration in the polymer solution is preferably adjusted to 10 to 60% by weight by, as required, adding the solvent used in the polymerization. When the polymer solution concentration is low, the concentration can be adjusted to a desired concentration using one or two or more of evaporators, such as a flash evaporator, a thin film evaporator, a stirring tank evaporator, a wet wall type evaporator. In contrast, when the polymer solution concentration is high, the concentration can be adjusted to a desired concentration by diluting with a solvent.

An aqueous solution containing a particulate resin can be obtained by: adding a surfactant and water to the purified polymer solution thus obtained, i.e., a polymer solution in which a catalyst is deactivated and removed; and removing the solvent by heating while performing liquid-liquid dispersion by stirring. There is no limitation on the amount of the water to be added. In view of ease of liquid-liquid dispersion, it is preferable to add water in an amount 0.5 to 4 times the amount of the polymer solution.

As the surfactant, a nonionic surfactant is suitably used due to the low foaming properties. As a specific example of the nonionic surfactant, glycerin fatty acid ester, sorbitan fatty acid ester, propylene glycol fatty acid ester, sucrose fatty acid ester, citric acid mono(di or tri) stearin ester, pentaerythritol fatty acid ester, trimethylolpropane fatty acid ester, polyglyceryl fatty acid ester, polyoxyethylene glycerin fatty acid ester, polyoxyethylene sorbitan fatty acid ester, polyethylene glycol fatty acid ester, polypropylene glycol fatty acid ester, polyoxy-ethylene-glycol fatty alcohol ether, polyoxyethylene alkyl phenyl ether, N,N-bis(2-hydroxyethylene) fatty amine, condensation products of fatty acid and diethanol, block copolymers of polyoxyethylene and polyoxypropylene, polyethylene glycol, polypropylene glycol, etc., are mentioned. The above substance may be used alone or as a combination of two or more thereof. There is no limitation on the amount of the surfactant to be added. It is preferable that amount of the surfactant to be added be in the range of 0.05 part by weight to 5 parts by weight relative to the polymer. When the amount of the surfactant is 0.05 part by weight or less the properties as a surfactant cannot be sufficiently demonstrated, and therefore particles are not formed. In contrast, when the amount of the surfactant exceeds 5 parts by weight, deterioration in the physical properties of a polymer and a foaming problem in pulverizing become remarkable, and thus such an amount of the surfactant is not preferable.

As a device for use in the liquid-liquid dispersion by stirring and the removal of a polymerization solvent, a device equipped with a stirrer is suitably used. There is no limitation on the form of a stirring blade, and any blades, such as a screw blade, a propeller blade, an anchor blade, a paddle blade, an inclined paddle blade, a turbine blade, a large-sized lattice blade, can be used. The liquid-liquid dispersion operation and a solvent removing operation can be performed using one device or a plurality of devices. When a plurality of devices are used, the liquid-liquid dispersion operation is carried out with a first device for forming a dispersion liquid; the dispersion liquid is conveyed to a second device; and then the solvent removing operation is performed.

There is no limitation on the liquid temperature in the pulverization step (1), and it is preferable that the liquid temperature be equal to or higher than the azeotropic point of the solvent and water which were used for polymerization. It should be noted that, even if the liquid temperature is lower than the azeotropic point, a solvent can be easily removed by reducing the pressure of the inside of a container. To be specific, the liquid temperature is preferably 70°C or higher and lower than 130°C, and more preferably 80°C or higher and lower than 110°C. When the liquid temperature is lower than 70°C, a solvent removal rate is low. Thus, such a temperature is not preferable in view of production efficiency. In contrast, when the liquid temperature exceeds 130°C, a nonionic surfactant capacity decreases, whereby a stable liquid-liquid dispersion system cannot be formed.

In the present invention, a particulate resin is obtained by the liquid-liquid dispersion; a lubricant and a dispersant in predetermined amounts are added to an aqueous solution containing the particulate resin; and the mixture is heated under stirring. This enables to efficiently form a particulate substance.

As the lubricant, fatty acids, such as stearic acid, behenic acid; fatty acid metal salts, such as zinc stearate, calcium stearate; fatty acid amides, such as oleamide, erucamide, ethylenebisstearamide; and the like are mentioned. Among the above, fatty acid amide is preferable. The amount of the lubricant is 0.05 part by weight to 5 parts by weight relative to 100 parts by weight of polymer. When the amount of the lubricant is less than 0.05 part by weight, the properties as the lubricant cannot be sufficiently demonstrated and the blocking resistance is not improved. In contrast, when the amount of the lubricant exceeds 5 parts by weight, the deterioration in the physical-properties of a polymer becomes remarkable, and thus, such an amount is not preferable.

As the dispersant, nonionic high molecular weight surfactants and the like are mentioned, and hydroxyl-containing cellulose derivatives are preferable. For example, methylcellulose, hydroxyethylmethylcellulose, ethyl hydroxyethylmethylcellulose, hydroxypropylmethylcellulose, etc., are mentioned. Particularly preferable is methylcellulose. By the combined use of the dispersant and the lubricant, the lubricant can be efficiently adhered to the surface of the particulate substance. The amount of the dispersant is 0.1 to 1 time by weight the amount of the lubricant. When the amount of the dispersant is not in the above range, the lubricant becomes difficult to efficiently adhere to the surface of the particulate substance and filtration wastewater of the particulate resin becomes muddy. Thus, such an amount is not preferable. When the amount of the dispersant is less than 0.1 time the amount of the lubricant, an effect of adhering the lubricant to the surface of the particulate substance cannot be sufficiently demonstrated, and the blocking resistance is not improved. In contrast, when the amount of the dispersant exceeds 1 time the amount of the lubricant, a foaming problem in pulverizing becomes remarkable, and thus, such an amount is not preferable.

Through the steam stripping step (2) for venting steam following the pulverization step (1), a remaining polymerization solvent can be further removed and the added lubricant and the dispersant can be efficiently adhered to the surface of the particulate substance. This enables to improve the blocking resistance of the particulate substance after dehydration and can efficiently deliver the resultant while preventing the blockage of a recovery hopper, a line, etc. Moreover, a particulate resin can be stably produced without blocking a dehydrated particulate resin during the step before drying and without deteriorating the quality of the product to be obtained, especially transparency. In the case of an isobutylene block copolymer, in order to effectively adhere the lubricant and the dispersant to the surface of the particulate resin, the heating temperature during steam stripping treatment is preferably 70°C or higher and lower than 180°C. When the heating temperature is lower than 70°C, the lubricant and the dispersant do not efficiently adhere to resin, and the blocking resistance effect is insufficient. In contrast, when the heating temperature is higher than 180°C, resin to resin adhesion becomes remarkable and coarse particles are formed, and thus such a temperature is not preferable.

Any container may be used for the steam stripping step (2) insofar as a line for introducing steam is connected to the container. A method of introducing steam to a stirring container is suitably used similarly as in the suspension and the solvent removing operation. The steam stripping operation can be performed, following the solvent removing operation, by venting steam in the same tank or can be performed, following the solvent removing operation, by separately providing a stripping tank. Stripping can be performed by bringing steam into contact with a resin slurry containing a particulate resin according to a continuous method in which at least one venting and stirring tank is connected to a container in which pulverization is performed or according to a plate method in which slurry is introduced from the upper part of a tank having a plurality of plates thereinside and steam is introduced from the bottom of the tank.

The aqueous solution containing the particulate resin after subjected to steam stripping is dehydrated and dried in a recovery step described below. In order to recover the particulate resin from the aqueous solution containing the particulate resin in this step, a dehydration operation using various filters, centrifugal separators, etc., can be employed. There is no limitation on the water content of the particulate resin after dehydrated by the operation, and it is advantageous that the water content is adjusted to 10 to 50% by weight in view of energy efficiency in the drying operation. The obtained hydrous particulate resin is dried using a conducting and thermal conduction dryer, such as a channel type stirring dryer; a hot air convection dryer, such as a fluidized bed dryer; and the like, thereby yielding a particulate substance product.

As described above, the present invention is described referring to an example of the method of producing the particulate substance comprising an isobutylene polymer. The method of the present invention can be applied to polymers obtained by various polymerization methods, such as cationic polymerization, anionic polymerization, and radical polymerization. Mentioned as such polymers are, for example, butadiene rubber (BR), isoprene rubber (IR), styrene-butadiene rubber (SBR), ethylene-propylene rubber (EPM, EPDM), a styrene-butadiene-styrene block copolymer (SBS), a styrene-isoprene-styrene block copolymer (SIS), a styrene-ethylene/butylenes-styrene block copolymer (SEBS), a styrene-ethylene/propylene-styrene block copolymer (SEPS), etc. Moreover, the method of the invention can be applied to a resin composition containing polypropylene particles, and the like. Among the above, the method of the present invention is suitable for the isobutylene block copolymer which is difficult to provide a particulate substance having a favorable balance between a blocking property and transparency according to a conventional method because the isobutylene block copolymer has high viscoelasticity.

Hereinafter, the present invention will be described still more specifically with reference to Examples, but is not limited only to these

### Examples.

The molecular weight, transparency, blocking resistance, and filtration wastewater of a block copolymer shown in this example are determined or evaluated according to a method described below.

### (Molecular weight)

Waters GPC system (column: ShodexK-804 (polystyrene gel) manufactured by Showa Denko K.K., Mobile phase: chloroform)

The number average molecular weight was shown in terms of polystyrene conversion.

### (Transparency)

With respect to transparency, a 2 mm thickness pressed sheet was produced using the obtained particulate resin, and the transparency was visually checked.

### (Blocking resistance)

The particulate resin was dried in a 100°C compartment dryer; 30 g of the resultant resin was put into a cylinder having an inner diameter of 5 cm; the load of 0.03 MPa was applied thereto using a piston; and the resultant resin was maintained in an atmosphere of 85°C for 2 hours. The blocking resistance of the particulate resin was evaluated by loosening the resin by a hand.

### (Filtration wastewater)

Evaluation was performed by visually checking muddiness of filtration wastewater when recovering the particulate resin.

### (Production Example 1)

3.70 kg of 1-chlorobutane (which was dried by molecular sieves), 1.92 kg of hexane (which was dried by molecular sieves), and 2.90 g of p-dicumyl chloride were put into a 20 L reactor with a stirrer. The reactor was cooled to -70°C, and then 2.18 g of N,N-dimethylacetamide and 844 g of isobutylene were added. 85 g of titanium tetrachloride was added and polymerization was started. The reaction was carried out for 2 hours while stirring the solution at -70°C. Subsequently, 408 g of styrene was added to the reaction solution, and then the reaction was further continued for 30 minutes, thereby obtaining a polymer solution.
The obtained polymer solution was poured into a large amount of water, thereby stopping the reaction. After the reaction stopped, the resultant was separated into a polymer solution phase and an aqueous phase using a separating funnel. The polymer solution phase was washed with water twice in the same manner, and then it was confirmed that the aqueous phase was neutral. Then, the polymer solution phase was delivered, thereby obtaining a polymer solution.
The GPC analysis showed that the number average molecular weight of the polymer was 105,000 and the molecular weight distribution was 1.15.

### (Example 1)

12.5 L of pure water and 12.5 L of polymer solution obtained in the Production Example 1 were put in a pressure-resistant stirrer having a tank volume of 50 L and an inner diameter of 30 cm. Then, 5.1 g of surfactant (polyethylene glycol monostearate) was added thereto, and then the stirrer was sealed. Stirring was performed at 400 rpm using two-stage four inclined paddles having a blade diameter of 15 cm as a stirring blade, and the temperature was increased using a jacket.
When the temperature inside the stirring tank reached 90°C, a solvent gas was introduced into a condenser attached to the pressure-resistant stirrer, and solvents were successively recovered. The internal pressure was adjusted while preventing foaming. When the internal pressure was reduced to an ordinary pressure and the temperature inside the stirring tank reached 95°C, warming and solvent evaporation were stopped. When the temperature inside the stirring tank was reduced to room temperature, stirring was stopped, and a resin slurry generated in the stirring tank was recovered (step (1)). Particulate substances in the recovered resin slurry were favorable particles having 1 to 2 mm particle diameters.
The recovered resin slurry was again returned to the stirring tank. 8.5 g (solid content was equivalent to 0.2 part by weight based on the resin) of fatty acid amide (ALFLOW H-50ES-P manufactured by NOF Corporation; Solid content concentration: 40%) as a lubricant and 1.7 g (solid content was equivalent to 0.1 part by weight based on the resin) of methylcellulose as a dispersant were added. The tank was sealed and steam stripping was performed (step (2)). As stripping conditions, a method of blowing steam from the lower part of the stirring tank while maintaining 120°C for 60 minutes was employed.
The resin slurry was subjected to centrifugal dehydration, dried in the compartment dryer in an atmosphere of 100°C for 2 hours, thereby obtaining a particulate resin.

### (Example 2)

Example 2 was conducted in the same manner with Example 1 except that, in the step (2), 2.125 g (solid content was equivalent to 0.05 part by weight based on the resin) of fatty acid amide (ALFLOW H-50ES-P manufactured by NOF Corporation; Solid content concentration: 40%) and 0.85 g (solid content was equivalent to 0.05 part by weight based on the resin) of methylcellulose were added.

### (Example 3)

Example 3 was conducted in the same manner with Example 1 except that, in the step (2), 21.25 g (solid content was equivalent to 0.5 part by weight based on the resin) of fatty acid amide (ALFLOW H-50ES-P manufactured by NOF Corporation; Solid content concentration: 40%) and 0.85 g (solid content was equivalent to 0.05 part by weight based on the resin) of methylcellulose were added.

### (Example 4)

Example 4 was conducted in the same manner with Example 1 except that, in the step (2), 21.25 g (solid content was equivalent to 0.5 part by weight based on the resin) of fatty acid amide (ALFLOW H-50ES-P manufactured by NOF Corporation; Solid content concentration: 40%) and 8.5 g (solid content was equivalent to 0.5 part by weight based on the resin) of methylcellulose were added.

### (Example 5)

Example 5 was conducted in the same manner with Example 1 except that, in the step (2), 42.5 g (solid content was equivalent to 1 part by weight based on the resin) of fatty acid amide (ALFLOW H-50ES-P manufactured by NOF Corporation; Solid content concentration: 40%) and 8.5 g (solid content was equivalent to 0.5 part by weight based on the resin) of methylcellulose were added.

### (Example 6)

Example 6 was conducted in the same manner with Example 1 except that, in the step (2), 106.25 g (solid content was equivalent to 2.5 part by weight based on the resin) of fatty acid amide (ALFLOW H-50ES-P manufactured by NOF Corporation; Solid content concentration: 40%) and 8.5 g (solid content was equivalent to 0.5 part by weight based on the resin) of methylcellulose were added.

### (Example 7)

Example 7 was conducted in the same manner with Example 1 except that, in the step (2), 212.5 g (solid content was equivalent to 5 part by weight based on the resin) of fatty acid amide (ALFLOW H-50ES-P manufactured by NOF Corporation; Solid content concentration: 40%) and 17 g (solid content was equivalent to 1 part by weight based on the resin) of methylcellulose were added.

### (Example 8)

Example 8 was conducted in the same manner with Example 1 except that, in the step (2), 8.5 g of calcium stearate (solid content was equivalent to 0.5 part by weight based on the resin) was used in place of fatty acid amide and 0.85 g (solid content was equivalent to 0.05 part by weight based on the resin) of methylcellulose was added.

As shown in Table 1, the particulate resins obtained in Examples 1 to 8 were excellent in the blocking resistance and transparency. The filtration wastewater when recovering the particulate resin was free from muddiness, and was colorless and transparent.

### (Comparative Example 1)

Comparative Example 1 was conducted in the same manner with Example 1 except that, in the step (2), fatty acid amide and methylcellulose were not added.
As shown in table 1, the obtained particulate resin had poor blocking resistance and showed resin to resin adhesion. Moreover, the resin was not completely loosened by a hand.

### (Comparative Example 2)

Comparative Example 2 was conducted in the same manner with Example 1 except that, in the step (2), 21.25 g (solid content was equivalent to 0.5 part by weight based on the resin) of fatty acid amide (ALFLOW H-50ES-P manufactured by NOF Corporation; Solid content concentration: 40%) was added.
As shown in Table 1, the obtained particulate resin had no problem in the resin transparency and the blocking resistance property. However, the filtration wastewater when recovering the particulate resin was muddy.

### (Comparative Example 3)

Comparative Example 3 was conducted in the same manner with Example 1 except that, in the step (2), 21.25 g (solid content was equivalent to 0.5 part by weight based on the resin) of fatty acid amide (ALFLOW H-50ES-P manufactured by NOF Corporation; Solid content concentration: 40%) and 0.68 g (solid content was equivalent to 0.04 part by weight based on the resin) of methylcellulose were added. As shown in Table 1, the obtained particulate resin had no problem in the resin transparency and the blocking resistance. However, the filtration wastewater when recovering the particulate resin was muddy.

**[Table 1]**

| | Lubricant*1 [part by weight] | Dispersant*2 [part by weight] | Blocking resistance*3 | Transparency*4 | Filtration wastewater*5 |
|---|---|---|---|---|---|
| Example 1 | 0.2 | 0.1 | ⓞ | ○ | ○ |
| Example 2 | 0.05 | 0.05 | ○ | ○ | ○ |
| Example 3 | 0.5 | 0.05 | ⓞ | ○ | ○ |
| Example 4 | 0.5 | 0.5 | ⓞ | ○ | ○ |
| Example 5 | 1.0 | 0.5 | ⓞ | ○ | ○ |
| Example 6 | 2.5 | 0.5 | ⓞ | ○ | ○ |
| Example 7 | 5.0 | 1.0 | ⓞ | ○ | ○ |
| Example 8 | 0.5 | 0.05 | ○ | ○ | ○ |
| Comparative Example 1 | None | None | × | ○ | ○ |
| Comparative Example 2 | 0.5 | None | △ | ○ | × |
| Comparative Example 3 | 0.5 | 0.04 | ○ | ○ | × |

| | | | | | |
|---|---|---|---|---|---|
| (Note) *1: In Examples 1 to 7 and Comparative Examples 1 to 3, fatty acid amide was used as a lubricant, and, in Example 8, calcium stearate was used as a lubricant. *2: In Examples and Comparative Examples, methylcellulose was used as a dispersant. *3: The evaluation criteria of the blocking resistance are as follows. ⓞ: No blocking ○: Loosened by a hand △: Loosened by a hand, but partially coarsely pulverized ×: Completely blocking and resin to resin adhesion *4: The evaluation criteria of the transparency are as follows. ○: No cloudy and excellent ×: Cloudy *5: The evaluation criteria of the filtration wastewater are as follows. ○: Colorless, transparent, and excellent ×: Muddy | | | | | |

As described above, according to the method of the present invention, a particulate resin excellent in the blocking resistance can be stably produced without deteriorating the quality, especially transparency. Moreover, the filtration wastewater when recovering the particulate resin is free from muddiness, and thus, waste water treatment is facilitated.

### Industrial Applicability

According to the method of producing the particulate resin of the present invention, the particulate resin excellent in the blocking resistance can be stably produced without deteriorating the resin transparency; and the filtration wastewater when recovering the particulate resin is free from muddiness, and thus, waste water treatment is facilitated. This method is applicable to the production of all kinds of particulate resins. In particular, the method of the invention is suitable for an isobutylene polymer which is difficult to provide a particulate substance having a favorable balance between the blocking resistance and the transparency according to a conventional method because the isobutylene polymer has high viscoelasticity.

## Claims

1. A method of producing a particulate resin, comprising, in recovering a particulate resin from an aqueous solution containing the particulate resin:
adding, to the aqueous solution, a lubricant in an amount of 0.05 to 5 parts by weight per 100 parts by weight of a resin component contained in the resin particulate and a dispersant in an amount 0.1 to 1 time by weight the amount of the lubricant.

2. The method of producing a particulate resin according to claim 1, comprising:
a step of polymerizing a monomer component to prepare a polymer solution;
a pulverization step of adding a surfactant and water to the polymer solution, and performing liquid-liquid dispersion by stirring for removing a solvent, thereby preparing an aqueous solution containing a particulate resin;
a steam stripping step of removing a remaining polymerization solvent from the aqueous solution containing the resin particulate; and
a recovery step of dehydrating and drying the aqueous solution containing the particulate resin from which the polymerization solvent has been removed, and recovering the particulate resin, wherein
the lubricant and the dispersant are added to the aqueous solution containing the particulate resin obtained in the pulverization step and the lubricant and the dispersant are adhered to the surface of the particulate resin in the steam stripping step.

3. The method of producing a particulate resin according to claim 1, wherein the lubricant is fatty acid amide.

4. The method of producing a particulate resin according to claim 1, wherein the dispersant is methylcellulose.

5. The method of producing a particulate resin according to any one of claims 1 to 4, wherein the resin component is an isobutylene polymer.

6. The method of producing a particulate resin according to claim 5, wherein
the isobutylene polymer is a block copolymer comprising:
(A) a block polymer containing isobutylene as a main body and
(B) a block polymer containing an aromatic vinyl monomer as a main body.
